# EUROPEAN PATENT APPLICATION

(11) **EP 4 159 912 A1**
(43) Date of publication of application: **05.04.2023**
(21) Application number: 21816657.7
(22) Date of filing: 01.06.2021
(51) Int. Cl.: D06M 11/71, D06M 11/46, D06M 13/513, D06M 15/03, D06M 15/05, D06M 15/15, D06M 101/32

(54) **FIBER PRODUCT AND METHOD FOR PRODUCING FIBER PRODUCT**

(30) Priority: 02.06.2020 JP 2020096164
(71) Applicant: SHINSHU UNIVERSITY, Matsumoto City, Nagano, 390-8621 (JP); Hap Co., Ltd., Tokyo 103-0012 (JP)
(72) Inventor: USAMI Hisanao, Ueda City, Nagano 386-8567 (JP); SUZUKI Moto, Tokyo 103-0012 (JP)
(74) Representative: Mewburn Ellis LLP
(86) International application number: PCT/JP2021/020868
(87) International publication number: WO 2021/246404

(57) **Abstract**

[Problem to be Solved]

Provided are a textile product capable of firmly fixing a functional material onto the surface thereof and having excellent washing durability, and a method for producing the textile product, being capable of efficiently producing the textile product.

[Solution]

Provided is a textile product including: a textile base material; a surface treatment layer formed of a silane coupling agent on at least a part of the surface of the textile base material; and a zirconium phosphate layer fixed on the surface treatment layer, wherein the silane coupling agent includes a silane compound having an amino group.

## Description

### Technical Field

The present invention relates to a textile product and a method for producing the textile product.

### Background Art

In recent years, attempts have been made to impart functions such as flame retardancy, water repellency, ultraviolet protection, antibacterial properties, bactericidal properties, and antifouling properties (self-cleaning properties) to textile products such as woven fabrics, knitted fabrics, and nonwoven fabrics. Such a function is generally imparted to the textile products by kneading a functional material that imparts the desired function into the resin that constitutes the textile.

However, depending on the functional material, the functional material embedded in the textile is in a state of hardly exhibiting its intended function. Meanwhile, when the functional material is supported on the surface of the textile product, the functional material tends to separate from the textile product due to friction during washing or use.

Patent Literature 1 proposes a textile product supporting a photocatalyst in which a zirconium phosphate layer is electrostatically fixed to a textile base material and the photocatalyst is electrostatically fixed to the surface of the zirconium phosphate layer.

### Citation List

### Patent Literature

Patent Literature 1: Japanese Unexamined Patent Application Publication No. 2010-185158

### Summary of Invention

### Technical Problem

Textile products such as clothes are frequently washed (cleaned) according to their use. Textile products to which a functional material is imparted are desired to have washing durability so that the function of the functional material can be exhibited even after a larger number of washing. The textile product described in Patent Literature 1 has a certain level of washing durability, but further improvement in washing durability is desired.

Furthermore, in the technique described in Patent Literature 1, in order to firmly fix the photocatalyst to the textile base material, it is necessary to form a plurality of zirconium phosphate layers on the surface of the textile base material through aluminum ions or polyaluminum ions. There is a demand for a method for producing a textile product capable of more efficiently and firmly fixing a functional material onto a textile base material.

Thus, an object of the present invention is to provide a textile product capable of firmly fixing a functional material onto the surface thereof and having excellent washing durability, and a method for producing the textile product, being capable of efficiently producing the textile product.

### Solution to Problem

The present inventors have made intensive investigations to achieve the above object and have found that a textile product capable of firmly fixing a functional material can be obtained by treating the surface of the textile base material with a silane coupling agent having an amino group to form a surface treatment layer, and forming a zirconium phosphate layer on the surface of the textile base material through the surface treatment layer. The present inventors have also found that the above method is simpler and more efficient than the conventional methods. Based on the above findings, the present inventors have made further investigations and thus reached the present invention.

The summary of the present invention is as follows.
(1) A textile product comprising:
   a textile base material;
   a surface treatment layer formed of a silane coupling agent on at least a part of the surface of the textile base material; and
   a zirconium phosphate layer fixed on the surface treatment layer,
   wherein the silane coupling agent includes a silane compound having an amino group.
(2) The textile product according to (1), wherein
   the textile base material has hydroxyl groups and/or carboxyl groups on the surface thereof, and
   the surface treatment layer is fixed to the textile base material through the hydroxyl groups and/or the carboxyl groups.
(3) The textile product according to (1) or (2), wherein the textile base material includes a polyester-based fiber.
(4) The textile product according to any one of (1) to (3), wherein the silane coupling agent includes an aminoalkyltrialkoxysilane.
(5) The textile product according to any one of (1) to (4), further comprising a functional material fixed on the surface of the zirconium phosphate layer.
(6) The textile product according to (5), wherein the functional material includes a photocatalyst.
(7) The textile product according to (6), wherein the photocatalyst includes titanium oxide.
(8) The textile product according to any one of (5) to (7), wherein the functional material includes a protein or a saccharide.
(9) The textile product according to any one of (5) to (8), wherein the functional material includes sericin.
(10) The textile product according to any one of (5) to (9), wherein the functional material includes cellulose.
(11) A method for producing a textile product, comprising:
   a step of treating at least a part of the surface of the textile base material with a silane coupling agent to form a surface treatment layer on at least a part of the surface of the textile base material; and
   a step of forming a zirconium phosphate layer on the surface treatment layer,
   wherein the silane coupling agent includes a silane compound having an amino group.
(12) The method for producing a textile product according to (11), further comprising a step of introducing hydroxyl groups and/or carboxyl groups to the surface of the textile base material, prior to the step of forming the surface treatment layer.
(13) The method for producing a textile product according to (11) or (12), further comprising a step of fixing a functional material onto the zirconium phosphate layer.

### Advantageous Effects of Invention

The above configuration can provide a textile product capable of firmly fixing a functional material onto the surface thereof and having excellent washing durability, and a method for producing the textile product, being capable of efficiently producing the textile product.

### Brief Description of Drawings

[Figure 1] Figure 1 shows a partially enlarged cross-sectional view of a textile product according to one embodiment of the present invention.
[Figure 2] Figure 2 shows a graph of the results of washing durability tests of textile products according to Example 1 and Comparative Example 1.
[Figure 3] Figure 3 shows scanning electron microscope images of a textile surface observed after each step of the method for producing a textile product according to Example 1.
[Figure 4] Figure 4 shows spectra obtained by observing the surfaces of textile products according to Example 1 and Comparative Example 1 by energy dispersive micro-fluorescence X-ray analysis.

### Description of Embodiments

Preferred embodiments of the textile product and the method for producing the textile product according to the present invention will be described below in detail with reference to the drawings.

### <1. Textile product>

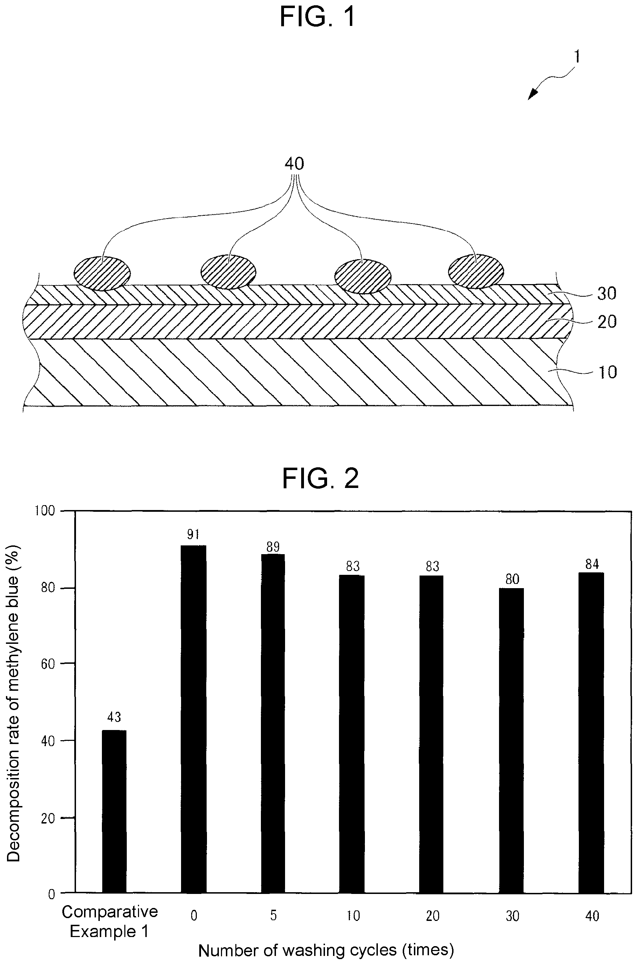

First, the textile product according to the present embodiment will be described. Figure 1 shows a partially enlarged cross-sectional view of the textile product according to the present embodiment. In the drawing, the size of each member is appropriately emphasized for ease of explanation, and the actual ratio and size of each member are not shown.

A textile product 1 shown in Figure 1 includes: a textile base material 10; a surface treatment layer 20 disposed on at least a part of the surface of the textile base material 10; a zirconium phosphate layer 30 fixed on the surface treatment layer 20; and a functional material 40 fixed on the surface of the zirconium phosphate layer 30.

### (1.1. Textile base material)

The textile base material 10 is a base material for the textile product. The textile base material 10 is typically constituted mainly by a fiber such as a natural fiber and/or a synthetic fiber.

The form of the textile base material 10 is not particularly limited and can be arbitrary selected according to the use of the textile product. For example, it can be a single fiber, a twisted yarn, a composite yarn, a hollow yarn, a staple fiber, a woven fabric, a knitted fabric, a net, a nonwoven fabric, wadding, or the like, and these can be used alone or in combination of two or more.

The textile base material 10 includes a natural fiber and/or a synthetic fiber as described above. Examples of the natural fiber include: various cellulose-based fibers such as cotton, hemp, kenaf, pulp (chemical pulp and mechanical pulp), other plant fibers, especially natural cellulose fibers including fibers derived from wood fibers, a regenerated cellulose fiber including viscose rayon, cupra, and acetate; a polysaccharide fiber having an amide group and/or an amino group such as chitin and chitosan; animal hair such as wool, cashmere, and angora; and silk. These can be used alone or in combination of two or more.

Examples of the synthetic fiber include an acrylic-based fiber such as an acrylic fiber and a modacrylic fiber, a polyester-based fiber such as polyethylene terephthalate, polytrimethylene terephthalate, polyethylene naphthalate, and polybutylene terephthalate, a polyether ester-based fiber, a polyolefin-based fiber such as polyethylene and polypropylene, a polyacrylate-based fiber, a polyvinyl chloride-based fiber, a nylon fiber such as nylon 6 and nylon 66, a polyamide fiber, a polyimide fiber, an aramid fiber, a polyetherimide-based fiber, a polyphenylene sulfide fiber, a polyurethane fiber, a polyvinyl alcohol fiber, an ethylene vinyl alcohol fiber, and a polyarylate-based fiber. These can be used alone or in combination of two or more.

The textile base material 10 may be composed of the natural fiber or the synthetic fiber alone, or may be composed of a combination of the natural fiber and the synthetic fiber. In these cases, as a matter of course, a plurality types of the natural fiber and a plurality types of the synthetic fiber may be used.

In addition, the textile base material 10 preferably has hydroxyl groups and/or carboxyl groups on the surface thereof. Specifically, hydroxyl groups and/or carboxyl groups are preferably exposed on the surface of the fiber that constitutes the textile base material 10. This allows the reactive groups of the silane coupling agent that constitutes a surface treatment layer 20 described below to bond with hydroxyl groups or carboxyl groups on the surface of the textile base material 10, and thus the surface treatment layer 20 can be firmly fixed to the surface of the textile base material 10.

For example, of the above natural fibers, the cellulose-based fiber has abundant hydroxyl groups derived from cellulose.

Alternatively, in the fiber that does not have hydroxyl groups and/or carboxyl groups on the surface, hydroxyl groups and/or carboxyl groups can be generated on the fiber surface by the method described below, allowing bonding between the silanol groups of the silane coupling agent constituting the surface treatment layer 20 and the hydroxyl groups or carboxyl groups on the surface of the textile base material 10. Thus, the surface treatment layer 20 is more firmly fixed to the surface of the textile base material 10.

The textile base material 10 includes preferably one or more selected from the group consisting of a cellulose-based fiber, a polysaccharide fiber, a polyester-based fiber, and a polyvinyl alcohol fiber, more preferably a natural cellulose fiber and a polyester-based fiber, particularly preferably one or more selected from the group consisting of cotton, hemp, kenaf, and polyethylene terephthalate.

The cellulose-based fiber has many hydroxyl groups or carboxyl groups exposed on the surface due to the chemical structure of the constituent components. Therefore, the adhesion between the surface treatment layer 20 and the textile base material 10 becomes improved, and the functional material becomes more firmly fixed to the textile base material 10.

The polyester-based fiber such as polyethylene terephthalate is a material that has conventionally been difficult to support a functional material on the fiber surface due to the chemical structure of the constituent components. However, according to the present invention, it becomes possible to firmly support a functional material 40 on the fiber surface. In addition, the generation of hydroxyl groups and/or carboxyl groups on the fiber surface by the method described below not only improves the adhesion between the surface treatment layer 20 and the textile base material 10, but also more firmly fixes the functional material 40 to the textile base material 10.

### (1.2. Surface treatment layer)

The surface treatment layer 20 is a layer formed by a silane coupling agent on at least a part of the surface of the textile base material 10. The silane coupling agent forming the surface treatment layer 20 includes a silane compound having an amino group. This makes it possible to firmly fix the zirconium phosphate layer 30 to the textile base material 10 through the surface treatment layer 20. As a result, it becomes possible to firmly fix the functional material 40 supported on the zirconium phosphate layer 30 to the surface of a textile product 1.

More specifically, the surface treatment layer 20 formed from a silane coupling agent has a siloxane bond, serving as a main skeleton, formed by reaction between reactive groups of the silane coupling agent, such as silanol groups or alkoxy groups bonded to silicon atoms. The reactive groups of the silane coupling agent also react with functional groups present on the surface of the textile base material 10, such as hydroxyl groups or carboxyl groups, to form covalent bonds for formation of the surface treatment layer 20. As a result, the formed surface treatment layer 20 is firmly fixed to the surface of the textile base material 10 by covalent bonding.

Meanwhile, the silane coupling agent includes a silane compound having an amino group, as described above. Therefore, many amino groups are exposed on the surface of the surface treatment layer 20 formed from the silane coupling agent. A nitrogen atom in the amino group can be positively charged by bonding with, for example, a hydrogen ion (H⁺). Then, the zirconium phosphate layer 30 can be fixed through positively charged amino groups exposed on the surface treatment layer 20. Herein, the amino groups exposed on the surface of the surface treatment layer 20 are fixed to the surface treatment layer 20 by covalent bonding, and the surface treatment layer 20 is fixed to the surface of the textile base material 10 by covalent bonding. Therefore, the amino group is prevented from being separated from the surface of the textile base material 10, as compared with the conventional technology in which the zirconium phosphate layer 30 is supported by metal cations such as aluminum. This makes it possible to definitely fix the zirconium phosphate layer 30 to the textile base material 10 through the surface treatment layer 20.

In addition, the surface treatment layer 20 formed from the silane coupling agent mainly contains relatively stable siloxane. Therefore, even when the textile product 1 supports a material having reactivity or catalyzing a reaction as a functional material on the zirconium phosphate layer 30, the surface treatment layer 20 protects the textile base material 10 from deterioration.

As described above, the silane coupling agent forming surface treatment layer 20 includes a silane compound having at least an amino group. Examples of the silane compound having an amino group include aminoalkyltrialkoxysilane, di-(aminoalkyl)-dialkoxysilane, and aminoalkyl-di-(alkoxy)-monoalkylsilane.

Examples of the aminoalkyltrialkoxysilane include a silane compound represented by the following formula (1).

Si(OR¹)₃R²NH₂ (1)

In the formula (1), R¹ is a linear or branched alkyl group having 1 to 10 carbon atoms, and R² is a linear or branched alkylene group having 1 to 10 carbon atoms.

In R¹, the linear alkyl group includes a methyl group, an ethyl group, a n-propyl group, a n-butyl group, a n-pentyl group, a n-hexyl group, a n-heptyl group, a n-octyl group, a n-nonyl group, and a n-decyl group. In addition, examples of the branched alkyl group for R¹ include an i-propyl group, a t-butyl group, and an i-butyl group.

The number of carbon atoms in R¹ is preferably 2 or more in order to suppress deterioration of the silane coupling agent during storage. In addition, the number of carbon atoms in R¹ is preferably 6 or less, more preferably 4 or less, in order to maintain high reactivity of the silane coupling agent when forming the surface treatment layer 20. R¹ is preferably an ethyl group, a n-propyl group, a n-butyl group, an i-propyl group, a t-butyl group, or an i-butyl group, particularly preferably the ethyl group, the n-propyl group, or the n-butyl group.

Examples of the linear alkylene group for R² include a linear alkylene group having 1 to 10 carbon atoms, such as a methylene group, an ethylene group, a n-propylene group, a n-butylene group, a n-pentylene group, a n-hexylene group, a n-heptylene group, and a n-octylene group. Examples of the branched alkylene group for R² include a 1-methylpropylene group, a 2-methylpropylene group, a 1,1-dimethylpropylene group, a 1,2-dimethylpropylene group, a 1,3-dimethylpropylene group, a 2,2-dimethylpropylene group, a 1,2,3-trimethylpropylene group, a 1,1,2-trimethylpropylene group, a 1,2,2-trimethylpropylene group, a 1,1,3-trimethylpropylene group, a 1-methylbutylene group, a 2-methylbutylene group, a 1,1-dimethylbutylene group, a 1,2-dimethylbutylene group, a 1,3-dimethylbutylene group, a 1,4-dimethylbutylene group, a 2,2-dimethylbutylene group, a 2,3-dimethylbutylene group, a 1,2,3-trimethylbutylene group, a 1,2,4-trimethylbutylene group, a 1,1,2-trimethylbutylene group, a 1,2,2-trimethylbutylene group, a 1,3,3-trimethylbutylene group, a 1-methylpentylene group, a 2-methylpentylene group, a 3-methylpentylene group, a 1-methylhexylene group, a 2-methylhexylene group, and a 3-methylhexylene group.

The number of carbon atoms in R² is preferably 2 or more, from the viewpoint of ensuring the stability of the silane coupling agent. The number of carbon atoms in R² is preferably 6 or less, more preferably 4 or less. R² is preferably an ethylene group, a n-propylene group, a n-butylene group, or a n-pentylene group, particularly preferably the ethylene group, the n-propylene group, or the n-butylene group.

Preferable examples of the aminoalkyltrialkoxysilane include 2-aminoethyltriethoxysilane, 2-aminoethyltri-n-propoxysilane, 2-aminoethyltriisopropoxysilane, 2-aminoethyltri-n-butoxysilane, 2-aminoethyltri-i-butoxysilane, 2-aminoethyltri-sec-butoxysilane, 2-aminoethyltri-tert-butoxysilane, 3-aminopropyltriethoxysilane, 3-aminopropyltri-n-propoxysilane, 3-aminopropyltriisopropoxysilane, 3-aminopropyltri-n-butoxysilane, 3-aminopropyltri-i-butoxysilane, 3-aminopropyltri-sec-butoxysilane, and 3-aminopropyltri-tert-butoxysilane.

Examples of the di-(aminoalkyl)-dialkoxysilane include a silane compound represented by the following formula (2).

Si(OR³)₂(R⁴NH₂)₂ (2)

Examples of the aminoalkyl-di-(alkoxy)-monoalkylsilane include a silane compound represented by the following formula (3).

Si(OR⁵)₂(R⁶NH₂)R⁷ (3)

In the above formulas (2) and (3), R³, R⁵, and R⁷ are the same as R¹ in the above formula (1), including preferred embodiments thereof. In addition, in the above formulas (2) and (3), R⁴ and R⁶ are the same as R² in the above formula (1), including preferred embodiments thereof.

Of these described above, the silane coupling agent preferably includes aminoalkyltrialkoxysilane, and more preferably includes one or more selected from the group consisting of 2-aminoethyltriethoxysilane, 2-aminoethyltri-n-propoxysilane, 2-aminoethyltriisopropoxysilane, 2-aminoethyltri-n-butoxysilane, 3-aminopropyltriethoxysilane, 3-aminopropyltri-n-propoxysilane, and 3-aminopropyltriisopropoxysilane.

In addition, the silane coupling agent may include a silane compound other than the silane compound having an amino group. Examples of such a silane compound include: an alkoxysilane compound such as methyltrimethoxysilane, dimethyldimethoxysilane, phenyltrimethoxysilane, dimethoxydiphenylsilane, n-propyltrimethoxysilane, hexyltrimethoxysilane, decyltrimethoxysilane, 1,6-bis(trimethoxysilyl)hexane, tetraethoxysilane, methyltriethoxysilane, dimethyldiethoxysilane, phenyltriethoxysilane, n-propyltriethoxysilane, hexyltriethoxysilane, and octyltriethoxysilane; a vinyl group-containing silane compound such as vinyltrimethoxysilane and vinylethoxysilane; an epoxy group-containing silane compound such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltrimethoxysilane; a styryl group-containing silane compound such as p-styryltrimethoxysilane; a (meth)acryloxy group-containing silane compound such as 3-methacryloxypropylmethyldimethoxysilane, 3-methacryloxypropyltrimethoxysilane, 3-methacryloxypropylmethyldiethoxysilane, and 3-methacryloxypropyltriethoxysilane; an ureido group-containing silane compound such as 3-ureidopropyltrialkoxysilane; an isocyanate group-containing silane compound such as 3-isocyanatopropyltriethoxysilane; an isocyanurate group-containing silane compound such as tris-(trimethoxysilylpropyl)isocyanurate; hexamethyldisilazane; and hexamethyldisiloxane.

In such a case, the content of the silane compound having an amino group in the silane coupling agent is 10% by mass or more, preferably 50% by mass or more.

The surface treatment layer 20 is formed by using the silane coupling agent as described above. The details of the formation method will be described below.

The average thickness of the surface treatment layer 20 is not particularly limited, and is, for example, 0.002 µm or more and 10 µm or less, preferably 0.1 µm or more and 1 µm or less.

The surface treatment layer 20 may have a relatively uniform thickness, or may have different thicknesses at different portions. When the thicknesses of the surface treatment layer 20 differ at different portions, the surface treatment layer 20 has unevenness. In this case, the surface treatment layer 20 can support a larger amount of zirconium phosphate polymer, thereby allowing further enhancing the ability of the zirconium phosphate layer 30 to adsorb a material, as described below.

### (1.3. Zirconium phosphate layer)

The zirconium phosphate layer 30 is fixed on the surface treatment layer 20. The zirconium phosphate layer 30 is configured by stacking one layer or a plurality of layers of plate-like inorganic polymers separated from zirconium phosphate having a layered structure. For example, the zirconium phosphate layer 30 is configured by stacking one layer or a plurality of layers of layered inorganic polymer ([Zr((R⁸₄N)ₓH₁₋ₓPO₄)₂]) that is separated by replacing some or all of the hydrogen ions in the crystalline zirconium phosphate ([Zr(HPO₄)₂]·nH₂O) having a layered structure with bulky alkylammonium ions typified by tetraalkylammonium ions.

The phosphate groups in the plate-like polymer constituting the zirconium phosphate layer 30 are negatively charged. Whereas, the amino groups exposed on the surface of the surface treatment layer 20 become positively charged ammonium cations by receiving hydrogen ions. The zirconium phosphate layer 30 is fixed to the surface treatment layer 20 by electrostatically bonding the phosphate groups of the zirconium phosphate layer 30 and the ammonium cations of the surface treatment layer 20. Herein, the zirconium phosphate layer 30 has a large number of phosphate groups on the contact surface with the surface treatment layer 20 due to the chemical structure thereof. Whereas, the surface treatment layer 20 also has a large number of ammonium cations on the contact surface with the zirconium phosphate layer 30. This generates electrostatic bonding (multipoint electrostatic bonding) between large numbers of phosphate groups on the zirconium phosphate layer 30 and ammonium cations on the surface treatment layer 20, and thus the surface treatment layer 20 and the zirconium phosphate layer 30 are fixed. In this case, even when some of the bonds between the phosphate groups and the ammonium cations are broken, the fixation between the surface treatment layer 20 and the zirconium phosphate layer 30 is maintained by other bondings. Furthermore, nthe phosphate group and the ammonium cation of the bonding cut once are also rebonded when they come close to each other again. As described above, the zirconium phosphate layer 30 is firmly fixed on the surface treatment layer 20.

Meanwhile, the zirconium phosphate layer 30 also has exposed phosphate groups on the surface opposite to the surface treatment layer 20. Therefore, the zirconium phosphate layer 30 can electrostatically or chemically fix the functional material 40 through the phosphate groups.

Furthermore, the zirconium phosphate layer 30 has an ion exchange ability similar to an ion exchange resin. Therefore, when the textile product 1 is used as clothes or the like, the zirconium phosphate layer 30 can adsorb ammonia or ammonium ions contained in sweat or urine. The ion exchange ability of the zirconium phosphate layer 30 is reversible, and therefore regeneration by ion exchange with hydrogen ions in water during washing is also possible.

In addition, the thickness of the plate-like polymer constituting the zirconium phosphate layer 30 is approximately 0.75 nm. Therefore, if a large number of polymer layers, for example several tens of layers, are stacked, the zirconium phosphate layer 30 is covered in a relatively thin state and thus hardly affects the texture of the textile product 1.

As crystalline zirconium phosphate, α-type (Zr(HPO₄)₂·2H₂O) and γ-type (Zr(PO₄)(H₂PO₄)·2H₂O) are known. The α-type has a smaller interlayer distance in the polymer than the γ-type, and intercalation of unwanted ions such as Na⁺ hardly occurs. In addition, in the structure of the phosphate group, the γ-type has a partial structure of phosphate ions and dihydrogen phosphate ions. In contrast, the α-type consists only of a partial structure of hydrogen phosphate ions, and thus the charge density on the surface of the polymer is more uniform, the bonding with ammonium cations is presumed to be homogeneous and evenly distributed, and stronger bonding can be expected. Therefore, it is preferable to use a zirconium phosphate polymer separated from α-type crystalline zirconium phosphate.

In addition, in the layered inorganic polymer ([Zr((R⁸₄N)ₓH₁₋ₓPO₄)₂]) constituting the zirconium phosphate layer 30, R⁸ each independently represents H or a linear or branched alkyl group having 1 or more and 10 or less carbon atoms. As the linear alkyl group and the branched alkyl group, the same group as described above for R¹ can be used. R⁸ is preferably a linear alkyl group having 1 or more to 6 or less carbon atoms, more preferably a linear alkyl group having 2 or more and 5 or less carbon atoms, further preferably, a n-propyl group, a n-butyl group or a n-pentyl group. Each of R⁸ is preferably the same.

The average thickness of the zirconium phosphate layer 30 is not particularly limited, and is, for example, 1 nm or more and 1000 nm or less, preferably 10 nm or more and 500 nm or less.

The zirconium phosphate layer 30 may have a relatively uniform thickness, or may have different thicknesses at different portions. Alternatively, the zirconium phosphate layer 30 may have unevenness due to the unevenness of the surface treatment layer 20. For example, when the zirconium phosphate layer 30 has unevenness on the surface thereof, such unevenness on the zirconium phosphate layer 30 increases the surface area of the zirconium phosphate layer 30 to promote the adsorption of the functional material 40 and other materials such as ammonia and ammonium ions.

### (1.4. Functional material)

The functional material 40 is a material for imparting an intended function to the textile product 1 in which it is fixed. Herein, examples of the intended function to be imparted includes flame retardancy, water repellency, heat shielding, light shielding (visible light and ultraviolet ray shielding), antibacterial properties, bactericidal properties, self-cleaning (antifouling properties), and imparting texture.

The functional material 40 is fixed on the zirconium phosphate layer 30. The mechanism for fixing the functional material 40 to the zirconium phosphate layer 30 is not particularly limited, and can be electrostatic fixation by the negative charge of the phosphate groups of the zirconium phosphate layer 30, or fixation by chemical bonding (for example, ionic bonding and covalent bonding) between the zirconium phosphate layer 30 and the functional material 40.

The functional material 40 is firmly fixed on the textile base material 10 through the surface treatment layer 20 and the zirconium phosphate layer 30 described above.

The functional material 40 is not particularly limited as long as it can be fixed to the zirconium phosphate layer 30 and can exhibit the intended function. Examples of the functional material 40 includes a photocatalyst, a texture imparting agent, a water repellent agent, a moisturizing agent, a water absorbing agent, a light absorbing agent, a fluorescent agent, and an adsorption agent, and these can be used alone or in combination of two or more.

The photocatalyst is a material that exhibits a catalytic action when irradiated with an electromagnetic wave such as light. Examples of the photocatalyst include a metal compound such as an oxide, a nitride, a hydroxide, and a complex salt of a metal element. Such a metal compound is excited by light irradiation (in particular, ultraviolet ray irradiation), depending on the type, to exhibit oxidation-reduction ability, allowing decomposition of organic matter. Thereby, the photocatalyst causes to exhibit an antibacterial, bactericidal and/or self-cleaning (antifouling) action. Specific examples of the metal oxide includes: a metal oxide such as titanium dioxide, titanic acid, titanates, niobic acid, niobic acids, titanoniobic acids, zinc oxide, copper oxide, silver oxide, iron oxide, tungsten oxide, nickel oxide, molybdic acid, and tantalic acids; a metal oxynitride such as a tantalum oxynitride; a metal complex salt such as a bismuth vanadate salt; and a metal hydroxide complex salt such as a copper hydroxide phosphate salt.

Of these described above, the functional material 40 preferably includes a metal oxide, more preferably titanium oxide and/or silver oxide as a photocatalyst. Titanium oxide has high photocatalytic activity and can impart a high self-cleaning function to the textile product 1. In addition, silver oxide has high bactericidal and antibacterial functions.

Titanium oxide is known to have various crystal types such as anatase type, rutile type, and brookite type. Of these, the functional material 40 preferably includes the anatase type.

In addition, as for the metal oxide, secondary particles, which are typically obtained by aggregation of primary particles, are supported on the zirconium phosphate layer 30 as the functional material 40. The average particle size of the primary particles of the metal oxide is not particularly limited, and is preferably less than 1 µm, more preferably 50 nm or less. As a result, the metal oxide exhibits high photocatalytic activity and strong binding force. In addition, if the average particle size of the primary particles of the metal oxide is too small, the bandgap may widen due to the quantum size effect, making it impossible to effectively utilize near-ultraviolet rays, which may reduce the reaction efficiency. Thus, the average particle size of the primary particles is preferably 20 nm or more. The "average particle size of the primary particles" as used herein is the average value determined by obtaining the particle size from the image under electron micrograph observation by FE-SEM (Field Emission Scanning Electron Microscope): S-5000 manufactured by Hitachi, Ltd.

The particle size of the secondary particles of the metal oxide is not particularly limited, and from the viewpoint of stable fixation to the zirconium phosphate layer 30, maintenance of the texture of the textile, and the like, it is, for example, 50 to 5000 nm, preferably 1000 to 3000 nm. The particle size of the metal oxide dispersed in water is measured by a light scattering method in an aqueous dispersion liquid of the metal oxide. Compared with the secondary particles in the aqueous dispersion liquid of the metal oxide, the secondary particles (functional material 40) supported on the zirconium phosphate layer 40 tends to have an increased secondary particle size due to aggregation or the like during the process of being supported on the surface. The particle size of the secondary particles in the aqueous dispersion liquid of the metal oxide is reflected to the particle size of the metal oxide (functional material 40) supported on the zirconium phosphate layer 40. Herein, the aggregate consisting of particles in contact with each other on the surface on which they are supported necessarily results in an increase in the particle size, as compared with the secondary particles observed in the solution.

Most metal oxides as the functional material 40 are positively charged in an acidic solution and negatively charged in an alkaline solution due to the dissociation equilibrium of hydrophilic functional groups such as hydroxyl groups on the surface. In the present embodiment, using the electrification tendency of the metal oxide in water, the functional material 40 (metal oxide) positively charged in water is electrostatically adsorbed to the negatively charged zirconium phosphate layer 30 to fix the functional material 40 to the outermost portion of the textile base material. The phosphate group found in the partial structure of zirconium phosphate not only dissociates protons to provide the zirconium phosphate layer 30 with a permanent negative charge, but also has the property of specifically binding to the metal oxide such as titanium oxide. The density of the phosphate structure of zirconium phosphate is 4.1/square nm, which is an extremely high density, and therefore a nanoparticulate metal oxide can be firmly fixed by multipoint electrostatic bonding and specific covalent bonding.

A texture imparting agent imparts texture to the textile product 1. Examples of the texture imparting agent include a protein such as sericin. Sericin is a component that constitutes silk, and fixing sericin as the functional material 40 to the zirconium phosphate layer 30 allows the textile product 1 to exhibit the texture of silk.

A protein has peptide bonds, and the nitrogen atoms of the peptide bond can be positively charged by receiving hydrogen ions. Therefore, the protein is fixed to the phosphate groups of the zirconium phosphate layer 30 through such positively charged portions.

In addition, the functional material 40 may include saccharides. Using saccharides as the functional material 40 makes it possible to impart texture similar to cotton or regenerated cellulose fibers, water absorption, water retention, and the like. Examples of the saccharides include: polysaccharides such as cellulose, hemicellulose, agarose, chitin, chitosan, and alginic acid; disaccharides such as sucrose, lactose, maltose, trehalose, turanose, and cellobiose; trisaccharides such as raffinose, melezitose, and maltotriose; tetrasaccharides such as acarbose and stachyose; as well as oligosaccharides, and other monosaccharides such as glucose, xylose, fructose, mannose, and galactose. These can be used alone or in combination of two or more. The physical strength of the textile product 1 is ensured by the textile base material 10, regardless of the degree of polymerization of the saccharides as the functional material 40. Therefore, monosaccharides and saccharides with a low degree of polymerization such as oligosaccharides can also be used as the functional material 40.

In addition, when saccharides are difficult to be fixed on the zirconium phosphate layer 30, a layer of a silane compound may be further formed on the zirconium phosphate layer 30. As a result, an alkoxy group derived from the silane compound is generated on the surface of the zirconium phosphate layer 30, and can be strongly bonded to the hydroxyl group of the saccharides.

In Figure 1, the functional material 40 is fixed in a granular form on the zirconium phosphate layer 30. The present invention is not limited to the illustrated embodiment, and the functional material 40 can be fixed on the zirconium phosphate layer 30 in any shape. For example, the functional material 40 is not limited to the illustrated embodiment, and may be particles of nonuniform shape and particle size, or may be secondary particles in which a plurality of primary particles are aggregated. For example, the functional material 40 may be layered. In this case, the functional material 40 may be interpenetrated with the zirconium phosphate layer 30, or may have a porous structure.

According to the present embodiment described above, fixing the zirconium phosphate layer 30 to the textile base material 10 through the surface treatment layer 20 firmly fixes the zirconium phosphate layer 30 to the textile product 1. Therefore, separation of the functional material 40 due to separating of the zirconium phosphate layer 30 is suppressed. As a result, the functional material 40 can be firmly fixed to the textile product 1.

In the above description of the present embodiment, the textile product 1 comprises the functional material 40, but the textile product according to the present invention may not comprise the functional material. In this case, the textile product is distributed and used, for example, as an intermediate member, and any type of a functional material can be fixed afterwards as necessary.

### <2. Method for producing textile product>

Next, the method for producing the textile product according to the present embodiment will be described.

The method for producing a textile product according to the present embodiment, comprising:
a step of treating at least a part of the surface of the textile base material with a silane coupling agent to form a surface treatment layer on at least a part of the surface of the textile base material (surface treatment step); and
a step of forming a zirconium phosphate layer (zirconium phosphate layer forming step) on the surface treatment layer,
wherein the silane coupling agent includes a silane compound having an amino group.

In addition, the production method according to the present embodiment, prior to the surface treatment step, comprises:
a preparation step of preparing a textile base material; and
a step of introducing hydroxyl groups and/or carboxyl groups to the surface of the textile base material (pretreatment step). Furthermore, the production method according to the present embodiment comprises a step of fixing a functional material onto the zirconium phosphate layer (functional material fixing step) after the zirconium phosphate layer forming step. An example of the method for producing a textile product according to the present embodiment will be described in detail below, taking the production of the textile product 1 described above as an example.

### (2.1. Preparation step)

First, in the present step, a textile base material 10 is prepared. Examples of the textile base material 10 include various textile materials that can be used as the textile base material 10 described above. In addition, the textile base material 10 may be subjected to a known processing treatment or cleaning treatment, as necessary.

### (2.2. Pretreatment step)

In the present step, hydroxyl groups and/or carboxyl groups are introduced onto the surface of the textile base material 10. Thereby, the surface treatment layer 20 is more firmly formed and fixed on the surface of the textile base material 10 in the surface treatment step.

The method for introducing hydroxyl groups and/or carboxyl groups is not particularly limited. Examples thereof include oxidation of compounds that constitute the surface of the textile base material 10, solvolysis of amide groups (peptide bonds) and ester groups present on the surface of the textile base material 10, and adsorption and bonding of a compound having hydroxyl groups and/or carboxyl groups onto the surface of the textile base material 10. These methods may be used alone or in combination of two or more.

Specific methods for oxidizing the compound constituting the surface of the textile base material 10 include oxidation treatment with an oxidizing agent, irradiation with electromagnetic waves, or a combination thereof.

In the oxidation treatment with an oxidizing agent, the surface of the textile base material 10 is treated in the presence of an oxidizing agent such as ozone, hydrogen peroxide, chlorine, chlorine dioxide, and perchloric acid. Preferably, this treatment is performed in the presence of a liquid medium such as an aqueous solution. The oxidizing agent having a relatively high concentration can be retained in the liquid medium, allowing a uniform and efficient oxidation reaction. In this case, a liquid of the liquid medium may be any of alkaline, acidic, or neutral, and it can be appropriately changed according to the constituent material of the textile base material 10, the type of the oxidizing agent, the intended degree of oxidation, and the like.

Electromagnetic waves that can be used for electromagnetic wave irradiation are not particularly limited, and ultraviolet rays, visible light, and the like can be used. Of these, it is preferable to use ultraviolet rays in consideration of the efficiency of oxidation. In addition, the electromagnetic wave irradiation can be performed in an oxygen-existing atmosphere, for example, in an air atmosphere. In this case, the electromagnetic waves generate ozone from oxygen present in the atmosphere, and the ozone reacts and bonds on the surface of the textile base material 10 to generate a hydroxyl group or a carboxyl group.

Solvolysis of amide groups (peptide bonds) and ester groups present on the surface of the textile base material 10 can be performed by treating the textile base material 10 in a solution containing an acid or a base. Solvolysis can be suitably used to decompose a nitrile group and an ester group.

Examples of the acid include an inorganic acid such as hydrochloric acid, sulfuric acid, nitric acid, and phosphoric acid, and these can be used alone or in combination of two or more. Examples of the base include sodium hydroxide, potassium hydroxide, sodium carbonate, potassium carbonate, and ammonia, and these can be used alone or in combination of two or more.

Examples of the medium of the solution include water and various organic solvents such as an alcoholic solvent. Hydrolysis can be performed when water is used as the medium. Alternatively, when an alcoholic solvent is used as a medium, alcoholysis can be performed. The alcoholic solvent is not particularly limited, and examples thereof include methanol, ethanol, n-propyl alcohol, 2-methylpropyl alcohol, 1-butanol, 2-methoxyethanol, 2-ethoxyethanol, 1-methoxy-2-propanol, ethylene glycol, 1,2-propanediol, 1,3-propanediol, 1,3-butanediol, 1,4-butanediol, 2-ethylhexanol, and benzyl alcohol.

Adsorption and bonding of the compound having hydroxyl groups and/or carboxyl groups to the surface of the textile base material 10 is suitable for introducing hydroxyl groups and carboxyl groups onto the surface of a protein-based textile such as animal hair including wool, cashmere and angora. Specifically, for example, polyphenols having three or more hydroxyl groups in one molecule, such as tannin, tannic acid, quincunx, gall, and gallic acid, can be reacted with the textile base material 10. In this case, for example, it can be performed by dipping the textile base material 10 in a 1 to 100 mM aqueous solution of polyphenols (temperature: about 10 to 100°C) for about 0.25 to 2 hours. The reaction amount of polyphenols is preferably about 1 to 10% by weight relative to the textile base material 10.

Of these described above, the introduction of hydroxyl groups and/or carboxyl groups to the surface of the textile base material 10 is preferably performed by oxidation or solvolysis of the compound constituting the surface of the textile base material 10. In such a method, introduction of hydroxyl groups and/or carboxyl groups is easy, regardless of the type of the textile base material 10. In particular, for a chemical fiber such as an acrylic-based fiber, a polyester-based fiber, a polyolefin-based fiber, and a polyvinyl chloride-based fiber, subsequent introduction of hydroxyl groups or carboxyl groups is relatively difficult, but the above method can suitably introduce these functional groups.

The present step may be omitted. Specifically, the present step is omitted, when the surface treatment layer 20 can be suitably formed in the surface treatment step to be described below even when the present step is omitted. For example, when the textile base material 10 has a sufficient amount of hydroxyl groups or carboxyl groups on the surface thereof, the present step may be omitted. Examples of such a textile base material 10 include a textile base material constituted by a cellulose-based fiber.

### (2.3. Surface treatment step)

In the present step, at least a part of the surface of the textile base material 10 is treated with a silane coupling agent to form a surface treatment layer 20 on at least a part of the surface of the textile base material 10. Specifically, in the present step, the above-described silane coupling agent is applied onto the intended surface of the textile base material 10 and reaction is performed to form the surface treatment layer 20.

The method of applying the silane coupling agent onto the textile base material 10 is not particularly limited, and the application can be performed by dipping, spraying, coating, printing (for example, inkjet printing and screen printing), or the like. Of the methods described above, the dipping is preferable from the viewpoint of possible uniform application onto the uneven textile base material 10.

The dipping can be performed by dipping the textile base material 10 in a treatment liquid including a silane coupling agent. As the silane coupling agent included in the treatment liquid, the silane coupling agent that constitutes the surface treatment layer 30 described above can be used.

In addition, the treatment liquid preferably includes an organic solvent. Thereby, the concentration of the silane coupling agent is diluted and the amount of the silane coupling agent adhering to the textile base material 10 is adjusted. The organic solvent is not particularly limited as long as it can dissolve the silane coupling agent. Examples thereof include: an alcohol-based solvent such as methanol, ethanol, n-propyl alcohol, 2-methylpropyl alcohol, 1-butanol, 2-methoxyethanol, 2-ethoxyethanol, 1-methoxy-2-propanol, 1,3-butanediol, 1,4-butanediol, and 2-ethylhexanol, benzyl alcohol; a ketone-based solvent such as acetone, methyl ethyl ketone, methyl propyl ketone, methyl isobutyl ketone, diethyl ketone, dipropyl ketone, diisobutyl ketone, cyclohexanone, and diacetone alcohol; an ether-based solvent such as dimethyl ether, diethyl ether, di-n-propyl ether, diisopropyl ether, di-n-butyl ether, di-t-butyl ether, t-butyl methyl ether, 1,4-dioxane, ethylene glycol monomethyl ether, ethylene glycol monoethyl ether, ethylene glycol monobutyl ether, propylene glycol monomethyl ether propionate, and tetrahydrofuran; an ester-based solvent such as ethyl acetate, methyl acetate, butyl acetate, sec-butyl acetate, methoxybutyl acetate, amyl acetate, n-propyl acetate, isopropyl acetate, methyl lactate, ethyl lactate, and butyl lactate; a carbonate-based solvent such as dimethyl carbonate, diethyl carbonate, and ethyl methyl carbonate; a halogen-based solvent such as methylene chloride, trichlorethylene, perchlorethylene, 1-bromopropane, chloroform, and carbon tetrachloride; 2-pyrrolidone, N-methyl-2-pyrrolidone; N-ethyl-2-pyrrolidone; dimethylformamide; dimethylacetamide; sulfolane; morpholine; acetonitrile; and propionitrile. These can be used alone or in combination of two or more.

Of these, the treatment liquid includes, as an organic solvent, preferably one or more selected from the group consisting of the alcohol-based solvent and the ether-based solvent, more preferably, one or more selected from the group consisting of ethanol, n-propyl alcohol, 2-methylpropyl alcohol, and 1-butanol.

The concentration of the silane coupling agent in the treatment liquid is, for example, 0.1% by mass or more and 10% by mass or less, preferably 0.2% by mass or more and 1% by mass or less.

The dipping time of the textile base material 10 in the treatment liquid is not particularly limited, and is 30 seconds or more and 30 minutes or less, preferably 1 minute or more and 15 minutes or less. This allows an appropriate amount of the silane coupling agent to adhere to the textile base material 10.

The reaction of the silane coupling agent on the textile base material 10 can be performed, for example, by drying in an air atmosphere. In this case, air drying may be performed, or drying may be performed while heating at a temperature of 30°C or more and 150°C or less.

### (2.4. Zirconium phosphate layer forming step)

In the present step, the zirconium phosphate layer 30 is formed on the surface treatment layer 20. The zirconium phosphate layer 30 can be formed by applying a dispersion liquid of zirconium phosphate onto the surface treatment layer 20 and fixing the zirconium phosphate on the surface treatment layer 20.

More specifically, first, a dispersion liquid of zirconium phosphate is prepared by dispersing zirconium phosphate in a dispersion medium. The dispersion liquid of zirconium phosphate can be obtained by, for example, shaking crystalline zirconium phosphate having a layered structure in a dispersion medium for dispersion, further ion-exchanging with an alkaline agent including a hydroxide or the like of tetraalkylammonium (for example, tetraalkylammonium having an alkyl group having 1 to 6 carbon atoms, specifically tetramethylammonium, tetraethylammonium, tetrapropylammonium, and tetrabutylammonium), followed by separating individual zirconium phosphate polymers ([Zrₙ(PO₄)₂ₙ]²ⁿ⁻) from crystalline zirconium phosphate for dispersion while maintaining the pH at, for example, 7.5 or more and 10.0 or less, preferably 8.0 or more and 9.5 or less.

The method of applying the dispersion liquid of zirconium phosphate onto the surface treatment layer 20 is not particularly limited, and the application can be performed by dipping, spraying, coating, printing (for example, inkjet printing and screen printing), or the like. Of the above methods, the dipping is preferable from the viewpoint of uniformly applying the zirconium phosphate polymer. In addition, by the dipping, the zirconium phosphate polymer is simultaneously fixed to the surface treatment layer 20, allowing the zirconium phosphate layer 30 to be formed.

The dipping time of the textile base material 10 supporting the surface treatment layer 20 in the dispersion liquid of zirconium phosphate is not particularly limited, and is, for example, 1 minute or more and 60 minutes or less, preferably 2 minutes or more and 15 minutes or less.

In addition, the textile base material 10 may be heated while or after the textile base material 10 is dipped in the dispersion liquid of zirconium phosphate. This allows the zirconium phosphate polymer to be fixed to the surface treatment layer 20.

The heating method is not particularly limited, and any method can be employed, but microwave irradiation is preferable. The microwave irradiation allows the zirconium phosphate polymer to be fixed to the surface treatment layer 20 in a short time. For example, microwaves of 1 GHz or more and 5 GHz or less are used, and the dispersion liquid of zirconium phosphate can be heated by irradiating it with the microwaves for 5 seconds or more and 200 seconds or less.

When an external heat source such as a heater is used, heating can be performed by setting the temperature of the dispersion liquid of zirconium phosphate at 5°C or more and 60°C or less, and maintaining the temperature for 1 minute or more and 60 minutes or less.

After the textile base material 10 is dipped in the dispersion liquid of zirconium phosphate, the zirconium phosphate dispersion liquid excessively adhered to or penetrated between the fibers of the textile base material 10 may be removed. This reduces the adsorption unevenness of the zirconium phosphate layer 30, allowing the binding force to each of the surface treatment layer 20 and the functional material 40 to be increased. The dispersion liquid of zirconium phosphate can be removed by, for example, washing with a liquid medium such as water or an organic solvent.

Thereafter, drying is performed as necessary to obtain the textile base material 10 in which the zirconium phosphate layer 30 is fixed on the surface treatment layer 20. In this case, air drying may be performed, or drying may be performed while heating at a temperature of 30°C or more and 150°C or less.

When the dispersion liquid of zirconium phosphate is applied onto the surface treatment layer 20 by a method other than dipping, the zirconium phosphate layer 30 is fixed to the surface treatment layer 20 by drying or heating after application.

### (2.5. Functional material fixing step)

Finally, the functional material 40 is fixed to the zirconium phosphate layer 30. This provides the textile product 1 in which the functional material 40 is fixed on the zirconium phosphate layer 30. The functional material 40 can be fixed by applying the functional material 40 onto the zirconium phosphate layer 30.

A method for applying the functional material 40 onto the zirconium phosphate layer 30 is not particularly limited, and it is preferable to apply a treatment liquid in which the functional material 40 is dispersed or dissolved onto the zirconium phosphate layer 30. This can apply the functional material 40 relatively uniformly.

The dispersion medium or solvent for the functional material 40 is not particularly limited, and can be appropriately selected according to the chemical and physical properties of the functional material 40. For example, the above described organic solvent or water can be used.

The dipping time of the textile base material 10 comprising the zirconium phosphate layer 30 in the treatment liquid is not particularly limited, and is, for example, 1 minute or more and 120 minutes or less, preferably 2 minutes or more and 15 minutes or less.

In addition, the textile base material 10 may be heated while or after the textile base material 10 is dipped in the treatment liquid. Depending on the type of the functional material 40, this can fix the functional material 40 to the zirconium phosphate layer 30 through chemical bonding. For example, when a photocatalyst is used as the functional material 40, the photocatalyst is fixed to the zirconium phosphate layer 30 by chemical bonding such as covalent bonding, coordinate bonding, hydrogen bonding, or ionic bonding.

The heating method is not particularly limited, and any method can be employed, but microwave irradiation is preferable. Microwave irradiation can fix the functional material 40 to the zirconium phosphate layer 30 in a short time through chemical bonding. For example, microwaves of 1 GHz or more and 5 GHz or less are used, and the treatment liquid can be heated by irradiating it with the microwaves for 5 seconds or more and 300 seconds or less.

When an external heat source such as a heater is used, heating can be performed by setting the temperature of the treatment liquid at 5°C or more and 90°C or less, and maintaining the temperature for 5 minutes or more and 120 minutes or less.

Thereafter, drying is performed as necessary to obtain the textile product 1 in which the functional material 40 is fixed on the zirconium phosphate layer 30. In this case, air drying may be performed, or drying may be performed while heating at a temperature of 40°C or more and 150°C or less.

As described above, according to the present embodiment, the functional material 40 can be firmly fixed to the surface, and the textile product 1 excellent in washing durability can be efficiently produced. In particular, in the present embodiment, forming the zirconium phosphate layer 30 on the specific surface treatment layer 20 can firmly fix the functional material 40 to the zirconium phosphate layer 30 without forming a plurality of zirconium phosphate layers unlike the conventional art. Thus, the step of forming a plurality of zirconium phosphate layers can be omitted.

In particular, regarding a chemical fiber such as an acrylic-based fiber, a polyester-based fiber, a polyolefin-based fiber, and a polyvinyl chloride-based fiber, it is conventionally not easy to selectively fix a functional material on the surface, and it has been common to mix a functional material previously with the material that constitutes the chemical fiber. However, in the present embodiment, the functional material 40 can be firmly fixed to the surface of the textile base material 10 through the surface treatment layer 20 and the zirconium phosphate layer 30.

As described above, the method for producing a textile product according to the present embodiment includes the functional material fixing step, but this step may be omitted.

As described above, the present invention has been described in detail based on preferred embodiments, but the present invention is not limited to these, and each configuration can be replaced with any configuration that can exhibit the same function, or any configuration can also be added.

### Examples

Hereinafter, the present invention will be described in detail by examples, but the present invention is not limited to these examples.

### <1. Method for producing textile product>

### [Example 1]

### (1.1. Step of preparing textile base material)

First, a 5 cm square (approximately 0.6 g) sample cloth was cut from a polyester cloth (manufactured by hap Co., Ltd.) and used as a textile base material.

### (1.2. Pretreatment step)

Then, the sample cloth was irradiated with ultraviolet rays for 5 minutes in an air atmosphere under sealed conditions using a low-pressure mercury lamp (output: 6 W, wavelength: 254 nm).

### (1.3. Surface treatment step)

First, 2.1 g of aminopropyltriethoxysilane (product name LS3150, manufactured by Shin-Etsu Chemical Co., Ltd.) was weighed out in a glove box and mixed with 200 ml of ethanol to obtain a treatment liquid. The sample cloth was dipped in the obtained treatment liquid for 10 minutes, and then it was air-dried in an air atmosphere.

### (1.4. Zirconium phosphate layer forming step)

Distilled water of 400 ml was added to 0.043 g of α-zirconium phosphate (product name: CZP-100, manufactured by Daiichi Kigenso Kagaku Kogyo Co., Ltd.), and the mixture was stirred at a constant rate while 2 ml of a 10% by mass tetrabutylammonium hydroxide aqueous solution was gradually further added dropwise to provide a dispersion liquid of zirconium phosphate. Herein, during the stirring, the pH of the mixed liquid was maintained in the range of 8 to 9, and 10% by mass of the tetrabutylammonium hydroxide aqueous solution was added thereto.

Then, the sample cloth was dipped in the dispersion liquid of zirconium phosphate for 15 minutes. Thereafter, the sample cloth was taken out from the dispersion liquid of zirconium phosphate and irradiated with microwaves in a microwave oven (650 W, 2.45 GHz) for 3 minutes. The sample cloth was then rinsed three times with tap water and air-dried in an air atmosphere.

### (1.5. Functional material fixing step)

Distilled water of 20 ml was added to 0.90 g of titanium oxide (product name: P25, manufactured by Nippon Aerosil Co., Ltd.), and the mixture was pulverized with a planetary ball mill at 450 rpm for 15 minutes. Then 1 mL of the resultant suspended liquid was diluted with 450 mL of distilled water and stirred with a stirrer for 30 minutes to provide a TiO₂ treatment liquid.

Then, the sample cloth was dipped in the TiO₂ treatment liquid for 15 minutes. Thereafter, the sample cloth was taken out from the TiO₂ treatment liquid and irradiated with microwaves for 3 minutes in a microwave oven (650 W, 2.45 GHz). The sample cloth was then rinsed three times with tap water and air-dried in an air atmosphere.

As described above, a textile product according to Example 1 was obtained. A plurality of the textile products according to Example 1 were produced for the evaluation described below.

### [Comparative Example 1]

A 5 cm square (approximately 0.6 g) sample cloth was cut from a polyester cloth (manufactured by hap Co., Ltd.) and used as a textile product according to Comparative Example 1.

### <2. Evaluation>

### (2.1. Washing durability test)

The textile product according to Example 1 was washed 5, 10, 20, 30, and 40 times. Specifically, first, the textile product according to Example 1 was sewn on a corner of a cloth having a size of about 20 cm × 30 cm, and the cloth was placed in a laundry net. Then, washing cycles were repeated 5, 10, 20, 30, and 40 times in accordance with the standard washing method described in the method for washing SEK mark textile products by the Textile Evaluation Technology Council. Specifically, the washing cycles were repeated in the following procedure.

1) Water with a temperature of 40°C was poured to the top one among water levels in the water tank of a washing machine, and 40 ml of "JAFET standard compound detergent" was added relative to 30 L of the water to prepare a washing li quid.
2) Samples (textile products according to Example 1 and Comparative Example 1) and, as necessary, a load cloth were put into this washing liquid so that the bath ratio was 1:30, and a washing operation was performed.
3) After treatment for 5 minutes, the operation was stopped, the samples and the load cloth were dewatered with a dewatering machine, and then the washing liquid was replaced with fresh water of a normal temperature, and rinsing was performed for 2 minutes at the same bath ratio.
4) The samples and load cloth were dewatered, rinsed again for 2 minutes, and dewatered.
5) The washing cycle of 1) to 4) was repeated a specified number of times.

Regarding the textile product according to Example 1 and the textile product according to Comparative Example 1, in which no washing and washing were performed 5, 10, 20, 30, and 40 times, a piece of 5 cm × 2.5 cm was cut off, 0.3 ml of a 24.5 µM methylene blue solution was dropped thereon, and the piece was dried. Then, 0.3 ml of water was dropped on the portion where the methylene blue solution was dropped, and in a wet state, ultraviolet rays (0.6 mWcm⁻²) were irradiated for 120 minutes with a black lamp (NEC20S BL-B, 20 W). Thereafter, the diffuse reflection absorption spectrum of the textile surface on which methylene blue was adsorbed was measured with an ultraviolet-visible spectrophotometer (UV-2400PC, integrating sphere unit: ISR-2200 (inner diameter: 60 mm), manufactured by Shimadzu Corporation). The results are shown in Figure 2.

Figure 2 shows a graph of the results of washing durability tests of textile products according to Example 1 and Comparative Example 1. As shown in Figure 2, the textile product according to Example 1 had a higher decomposition rate of methylene blue than the textile product according to Comparative Example 1 in an unwashed state (0 times), indicating that supported titanium dioxide functioned as a photocatalyst. Furthermore, the textile product according to Example 1 was suppressed from decreasing the methylene blue decomposition rate even when the number of washing cycles was increased, and it can be thus understood that titanium dioxide was firmly fixed to the textile surface.

### (2.2. Scanning electron microscope observation)

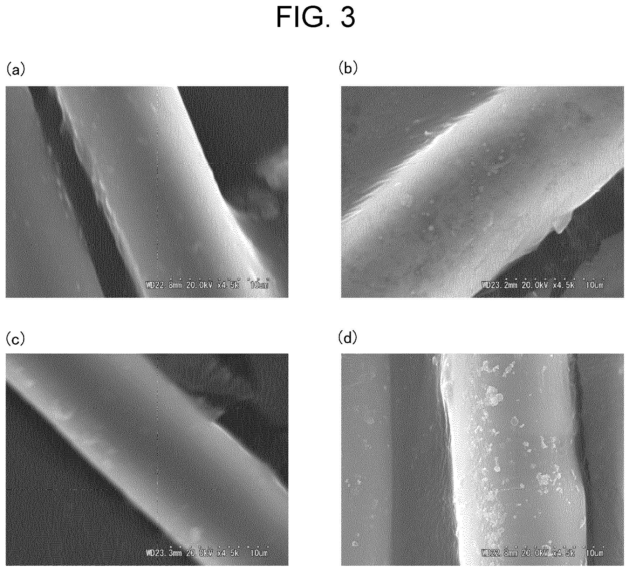

Using a scanning electron microscope ("S3000N", manufactured by Hitachi High-Tech Co., Ltd.), the textile surface of the sample cloth was observed (a) after the textile base material preparation step, (b) after the surface treatment step, (c) after the zirconium phosphate layer forming step, and (d) after the functional material fixing step, in Example 1. The results are shown in Figure 3.

Figure 3 shows scanning electron microscope images of the textile surface observed after each step of the method for producing a textile product according to the present embodiment. As shown in Figure 3(b), as compared with the untreated state (Figure 3(a)), the surface treatment layer with the silane coupling agent was a layer that covered the textile base material with irregularly shaped particles having 5 µm or less while generating unevenness of about 1 µm. In addition, the thickness of this surface treatment layer was estimated to be about 1 µm at maximum.

Furthermore, as shown in Figure 3(c), when the zirconium phosphate layer was formed, the unevenness derived from the surface treatment layer was no longer observed. In addition, after the functional material fixing step, as shown in Figure 3(d), it was observed that titanium dioxide aggregates having a size of about 200 nm to 1 µm were fixed.

### (3.3. Energy dispersive micro-fluorescence X-ray analysis)

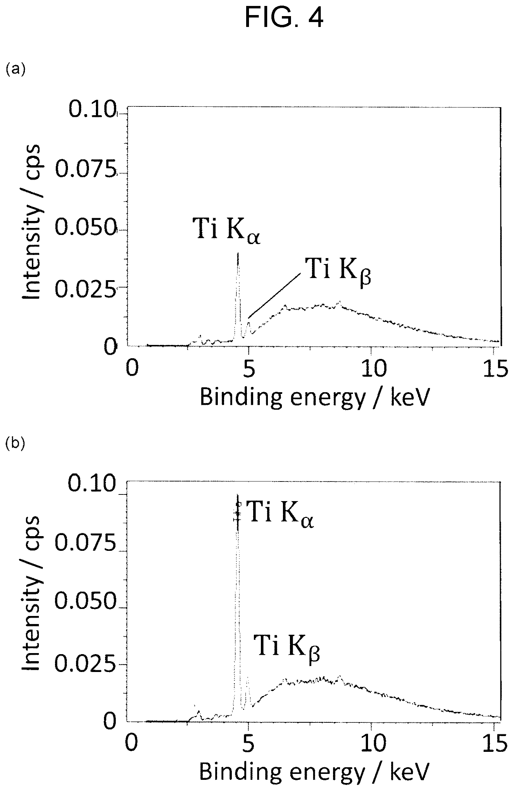

The surfaces of the textile products according to Example 1 and Comparative Example 1 were observed by using an energy dispersive micro- fluorescence X-ray analyzer (model name: µEDX-1300, Shimadzu Corporation). The results are shown in Figure 4. The EDX spectrum of the textile product according to Comparative Example 1 is shown in Figure 4(a), and the EDX spectrum of the textile product according to Example 1 is shown in Figure 4(b).

When observing the untreated textile product according to Comparative Example 1, as shown in Figure 4(a), a peak derived from TiK_{α} was observed at a binding energy of approximately 4.55 keV, and a peak derived from TiK_{β} was observed at approximately 4.97 keV. These peaks are presumed to be derived from titanium oxide added to provide opacity to the polyester cloth (manufactured by hap Co., Ltd.) as the textile base material. Whereas, when observing the textile product according to Example 1, as shown in Figure 4(a), a peak derived from TiK_{α} at a binding energy of approximately 4.55 keV and a peak derived from TiK_{β} at approximately 4.97 keV were observed to be significantly larger than those of the textile product according to Comparative Example 1. Thus, it was confirmed that titanium oxide was bound to the outermost layer of the textile product according to Example 1.

### <3. Method for producing textile product>

For the purpose of comparing a textile product in which a zirconium phosphate layer was formed by using aluminum ions and a textile product according to the present disclosure, the following textile products were produced and prepared.

### [Example 2]

A textile product according to Example 2 was produced in the same manner as in Example 1.

### [Comparative Example 2]

First, a 5 cm square (approximately 0.6 g) sample cloth was cut from a polyester cloth (manufactured by hap Co., Ltd.) and used as a textile base material. Then, the sample cloth was washed with tap water and a neutral detergent, rinsed twice with tap water, dewatered by centrifugation, and air-dried in the atmosphere.

Then, the sample cloth was irradiated with ultraviolet rays for 5 minutes in an air atmosphere under sealed conditions using a low-pressure mercury lamp (output: 6 W, wavelength: 254 nm).

Then, the sample cloth was dipped in 15 ml of a 3.67 mM potassium aluminum sulfate aqueous solution for 10 minutes, then rinsed twice with tap water, and dewatered by centrifugation. As potassium aluminum sulfate, a product manufactured by FUJIFILM Wako Pure Chemical Corporation was used.

Thereafter, distilled water of 400 ml was added to 0.043 g of α-zirconium phosphate (product name: CZP-100, manufactured by Daiichi Kigenso Kagaku Kogyo Co., Ltd.), and the mixture was stirred at a constant speed while 2 ml of a 10% by mass tetrabutylammonium hydroxide aqueous solution was gradually further added dropwise to provide a dispersion liquid of zirconium phosphate. Herein, during the stirring, the pH of the mixed liquid was maintained in the range of 8 to 9, and 10% by mass of the tetrabutylammonium hydroxide aqueous solution was added thereto.

Thereafter, the sample cloth was dipped in the dispersion liquid of zirconium phosphate for 10 minutes, then rinsed twice with tap water, and dewatered by centrifugation.

Then, the sample cloth was dipped in the titanium oxide treatment liquid prepared in 1.5. described above for 10 minutes, then rinsed twice with tap water, and dewatered by centrifugation.

As described above, a textile product according to Comparative Example 2 was obtained.

### [Comparative Example 3]

First, a 5 cm square (approximately 0.6 g) sample cloth was cut from a polyester cloth (manufactured by hap Co., Ltd.) and used as a textile base material.

Then, the sample cloth was washed with tap water and a neutral detergent, rinsed twice with tap water, dewatered by centrifugation, and air-dried in the atmosphere.

Then, the sample cloth was dipped in 15 ml of a 3.67 mM potassium aluminum sulfate aqueous solution for 10 minutes, then rinsed twice with tap water, and dewatered by centrifugation. As potassium aluminum sulfate, a product manufactured by FUJIFILM Wako Pure Chemical Corporation was used.

Thereafter, distilled water of 400 ml was added to 0.043 g of α-zirconium phosphate (product name: CZP-100, manufactured by Daiichi Kigenso Kagaku Kogyo Co., Ltd.), and the mixture was stirred at a constant speed while 2 ml of a 10% by mass tetrabutylammonium hydroxide aqueous solution was gradually further added dropwise to provide a dispersion liquid of zirconium phosphate. Herein, during the stirring, the pH of the mixed liquid was maintained in the range of 8 to 9, and 10% by mass of the tetrabutylammonium hydroxide aqueous solution was added thereto.

Then, the sample cloth was dipped in the prepared dispersion liquid of zirconium phosphate for 10 minutes, subsequently rinsed twice with tap water, and dewatered by centrifugation.

Then, the sample cloth was dipped in the titanium oxide treatment liquid prepared in 1.5. described above for 10 minutes, then rinsed twice with tap water, and dewatered by centrifugation.

As described above, a textile product according to Comparative Example 3 was obtained.

### [Comparative Example 4]

A sample cloth of 5 cm square (approximately 0.6 g) was cut from a polyester cloth (manufactured by hap Co., Ltd.), washed with tap water and a neutral detergent, rinsed twice with tap water, dewatered by centrifugation, and air-dried in the atmosphere. This was used as a textile product according to Comparative Example 4.

### <4. Evaluation>

### (4.1. Evaluation of photocatalytic activity)

Regarding the textile product according to Example 2 and the textile products according to Comparative Examples 2 and 3, 0.3 ml of a 24.5 µM methylene blue solution was dropped onto the central portion of a 5 cm × 5 cm sample cloth and the sample cloth was dried. Then, 0.3 ml of water was dropped on the portion where the methylene blue solution was dropped, and in a wet state, ultraviolet rays (0.5 mWcm⁻²) were irradiated for 120 minutes with a black lamp (NEC20S BL-B, 20 W). Thereafter, the diffuse reflection absorption spectrum of the textile surface on which methylene blue was adsorbed was measured with an ultraviolet-visible spectrophotometer (UV-2400PC, integrating sphere unit: ISR-2200 (inner diameter: 60 mm), manufactured by Shimadzu Corporation). Then, the decomposition rate of methylene blue was calculated from the diffuse reflectance absorption spectra before and after ultraviolet irradiation. The results are shown in Table 1.

### (4.2. Washing durability test)

The textile products according to Example 2 and Comparative Example 2 were washed 40 times in the manner described in 2.1. Then, photocatalytic activity was evaluated in the same manner as described in 4.1., and the decomposition rate of methylene blue was calculated from the diffuse reflection absorption spectra before and after ultraviolet irradiation. The results are shown in Table 1.

**[Table 1]**

| | Decomposition rate (%) | |
|---|---|---|
| | Before washing | After washing |
| Example 2 | 78 | 60 |
| Comparative Example 2 | 52 | 11 |
| Comparative Example 3 | 47 | 29 |
| Comparative Example 4 | 26 | - |

As shown in Table 1, as compared with the textile products according to Comparative Examples 2 and 3, the textile product according to Example 2 had a high decomposition rate of methylene blue both before and after washing, and exhibited significant photocatalytic activity. As a result, when the zirconium phosphate layer was formed through the surface treatment layer formed by the silane coupling agent including the silane compound having an amino group, it is presumed that more titanium oxide could be supported and that the supported titanium oxide could be more strongly retained during washing, as compared with forming a zirconium phosphate layer through aluminum ions.

In addition, the textile product according to Comparative Example 2 had a higher decomposition rate of methylene blue before washing than Comparative Examples 3 and 4, and exhibited significant photocatalytic activity. As a result, the textile product according to Comparative Example 2 had an increased affinity with aluminum ions due to the ultraviolet irradiation of the PET fiber surface of the textile base material, presuming that the amount of zirconium phosphate and subsequently the amount of titanium oxide supported were increased as compared with the PET fiber of the textile base material without surface treatment as shown in Comparative Example 3. However, after washing, the washing durability of the textile product according to Comparative Example 2 was remarkably lowered, confirming that the washing durability was significantly lower than that of Example 2. Methylene blue slightly absorbs ultraviolet rays, and a certain amount of methylene blue is decomposed by only ultraviolet irradiation. Therefore, decomposition of methylene blue was also observed in the textile product according to Comparative Example 4 in which neither zirconium phosphate nor titanium oxide was supported.

The textile product according to Comparative Example 3 had a lower decomposition rate before washing than that of Comparative Example 2. Thus, the amount of titanium oxide supported on the textile product according to Comparative Example 3 is estimated to be smaller.

The textile product according to Example 2 showed a significantly higher decomposition rate of methylene blue after washing than that of the textile product before washing according to Comparative Example 4. Thus, the textile product according to Example 2 is estimated to still support titanium oxide after washing. Whereas, the textile products according to Comparative Examples 2 and 3 showed the same or lower decomposition rate of methylene blue after washing as or than that of the textile product before washing according to Comparative Example 4. Thus, the textile products according to Comparative Examples 2 and 3 were estimated to fail to support titanium oxide after washing.

### Reference Signs List

- 1: Textile product
- 10: Textile base material
- 20: Surface treatment layer
- 30: Zirconium phosphate layer
- 40: Functional material

## Claims

1. A textile product comprising:
a textile base material;
a surface treatment layer formed of a silane coupling agent on at least a part of a surface of the textile base material; and
a zirconium phosphate layer fixed on the surface treatment layer,
wherein the silane coupling agent includes a silane compound having an amino group.

2. The textile product according to claim 1, wherein
the textile base material comprises hydroxyl groups and/or carboxyl groups on the surface thereof, and
the surface treatment layer is fixed to the textile base material through the hydroxyl groups and/or the carboxyl groups.

3. The textile product according to claim 1 or 2, wherein the textile base material comprises a polyester-based fiber.

4. The textile product according to any one of claims 1 to 3, wherein the silane coupling agent comprises an aminoalkyltrialkoxysilane.

5. The textile product according to any one of claims 1 to 4, further comprising a functional material fixed on a surface of the zirconium phosphate layer.

6. The textile product according to claim 5, wherein the functional material comprises a photocatalyst.

7. The textile product according to claim 6, wherein the photocatalyst comprises titanium oxide.

8. The textile product according to any one of claims 5 to 7, wherein the functional material comprises a protein or a saccharide.

9. The textile product according to any one of claims 5 to 8, wherein the functional material comprises sericin.

10. The textile product according to any one of claims 5 to 9, wherein the functional material comprises cellulose.

11. A method for producing a textile product,
comprising:
a step of treating at least a part of a surface of a textile base material with a silane coupling agent to form a surface treatment layer on at least a part of a surface of the textile base material; and
a step of forming a zirconium phosphate layer on the surface treatment layer,
wherein the silane coupling agent includes a silane compound having an amino group.

12. The method for producing a textile product according to claim 11, further comprising a step of introducing hydroxyl groups and/or carboxyl groups to a surface of the textile base material, prior to the step of forming the surface treatment layer.

13. The method for producing a textile product according to claim 11 or 12, further comprising a step of fixing a functional material onto the zirconium phosphate layer.
